# EUROPEAN PATENT SPECIFICATION

(11) **EP 0 627 390 B1**
(45) Date of publication and mention of the grant of the patent: **10.09.1997**
(21) Application number: 94303585.7
(22) Date of filing: 19.05.1994
(51) Int. Cl.: C03C 3/06

(54) **Viscosity tailoring of fused silica**
Einstellung der Viskosität von geschmolzenem Quarz
Ajustement de la viscosité de silice fondue

(30) Priority: 01.06.1993 US 69626
(43) Date of publication of application: 07.12.1994
(73) Proprietor: GENERAL ELECTRIC COMPANY, Schenectady, NY 12345 (US)
(72) Inventor: Antczak, Stanley M., Chesterland, Ohio 44026 (US); Rajaram, Mohan, Mentor, Ohio 44060 (US)
(74) Representative: Goode, Ian Roy

(56) References cited:
- US-A- 4 047 966
- CHEMICAL ABSTRACTS, vol. 116, no. 24, 15 June 1992, Columbus, Ohio, US; abstract no. 240607k, page 325 ; & JP-A-4 046 020 (ASAHI GLASS K.K.) 17 February 1992
- PATENT ABSTRACTS OF JAPAN vol. 15, no. 456 (C-886) 20 November 1991 & JP-A-03 193 637 (SEIKO EPSON CORP.) 23 August 1991

## Description

This invention relates to synthetic fused silica especially for use in semiconductor applications. Particularly, this invention relates to synthetic fused silica for preparation of elongated fused quartz members. More particularly, this invention relates to synthetic silica for use in tubing and rods for semiconductors.

Throughout the specification, numerous references will be made to the use of fused silica in semiconductor applications; however, it should be realized that the invention could be applied to many industries requiring synthetic fused silica having a higher than normal viscosity.

Fused silica has been used in metal-halide, halogen and mercury lamps because of its excellent mechanical strengths and its ability to handle high operating temperatures. In addition, fused silica is becoming an important constituent of the ever-expanding semiconductor and fiber optics industries. Its high purity and resistance to high temperatures are particularly desirable characteristics.

One difficulty in the use of fused quartz in the semiconductor industry is the level of impurities (30-50 ppm by weight). Accordingly, synthetic silica has been experimented with as a replacement to natural silica for some applications. However, a difficulty often encountered in utilizing the synthetic material is its low viscosity. Although a low viscosity may benefit fabricators who rework fused silica products, many fabricators require a fused silica having a higher viscosity. The semiconductor industry is an example of an industry which requires a high viscosity, low impurity fused silica.

US Patent No. 4047966 discloses a method of enhancing the refractoriness of high purity fused silica which is produced from a liquid flowable form of silica slurry or sol and the refractoriness of the fused silica is enhanced by homogeneously doping the silica with aluminum and/or titanium oxide, preferably in conjunction with elemental silicon.

Chemical Abstracts, Vol. 116, Ref. No. 240607K (& JP-A-4046020) discloses glass prepared from fine SiO₂ powder, which is obtained by thermal hydrolysis of halogen-containing silicon compounds and is doped with 5-40 ppm A1. The doping may be carried out during or after the hydrolysis. Preferably, the glass has slow-cooling point ≥ 1220° and contains ≤ 300 ppm OH and ≤ 1 ppm heavy and alkali metals.

JP-A-3193637 discloses a high purity quartz glass doped with 1-1,000 ppm aluminum.

An object of this invention is to provide a new and improved process for preparing a synthetic fused silica having a tailored viscosity.

According to the invention there is provided a process for preparing synthetic fused silica article as claimed in claim 1. The fused synthetic silica may comprise a mixture of silica and at least 7 parts per million aluminum. More preferably, the mixture comprises at least 20 parts per million aluminum.

Typical synthetic silica includes trace amounts of impurities such as alkali metals and hydroxyl groups.

In the accompanying drawings:
FIGURE 1 is a representation of a prior art fused silica lattice structure.
FIGURE 2 is a representation of a lattice structure of the current invention.
FIGURE 3 is a graphic representation of the R ratio of the current invention vs. log viscosity.

Reference will now be made in detail to the present preferred embodiment of the invention.

Viscosity as a function of R=Al₂O₃/M₂O, wherein M= Li, K and Na, has been found to have no relationship between the viscosity and the ratio (R) in fused synthetic silica. However, the current inventors have found that the log of viscosity is well represented by the function of R=Al₂O₃/(M₂O+H₂O).

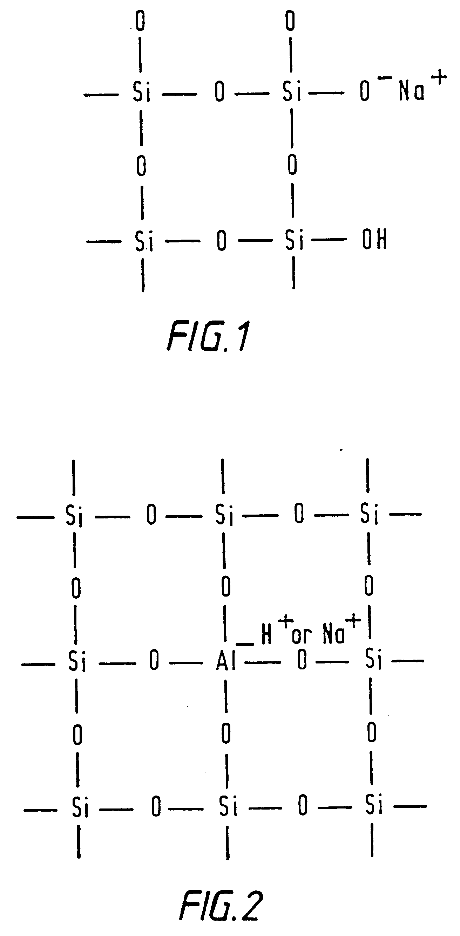

Particularly, without being bound by theory, it is believed that both alkali and hydroxyl groups present as impurities in all synthetic silica compositions function to terminate the composition network by forming non-bridging oxygens as shown in Figure 1. This indicates that the hydroxyl group is a substantial contributor to the R ratio. Concurrently, the inventors have determined that the addition of calculated amounts of aluminum, generally in the form of alumina, during the preparation of synthetic fused silica can create an aluminum site in the lattice structure functioning to tie up terminal alkali and hydroxyl groups, allowing the bridging of silica and oxygen to continue. Figure 2 represents the function of aluminum as envisioned by the inventors. The additional binding of silicon and oxygen molecules results in a higher viscosity fused silica.

Synthetic silica can be obtained from the Mitsubishi Kasei Corp., as MKC synthetic silica. Those of ordinary skill in the art will be aware of additional sources of synthetic silica.

Each of samples 1-7 were prepared from Mitsubishi MKC synthetic silica. Samples 1 and 2 demonstrate the composition of the silica. Examples 3-7 demonstrate fused synthetic silica following addition of various parts per million of alumina. The alumina was obtained from Reynolds Aluminum, particularly RC-HPT-DBM. The alumina was well mixed with the silica and thereafter calcined at about 1050°C to remove residual organics. The resultant powder was analyzed and the results are shown in Table 1. Preferably, the powder obtained is thereafter formed into an article as described in U.S. Patent Nos. 3,261,676 and 3,764,286, herein incorporated by reference.

**TABLE 1**

| **Samples 1-7** | | | | | | | |
|---|---|---|---|---|---|---|---|
| Chemical (ppm) | 1 | 2 | 3 | 4 | 5 | 6 | 7 |
| Al | 0.3 | 0.2 | 3.0 | 2.7 | 7.3 | 13.7 | 29.9 |
| Ba | <.05 | <.05 | <.05 | <.05 | <.05 | <.05 | <.05 |
| Ca | <.05 | <.05 | <.1 | <.05 | <.05 | <.05 | <.05 |
| Cd | <.02 | <.02 | <.02 | <.02 | <.02 | <.02 | <.02 |
| Co | <.02 | <.02 | <.02 | <.02 | <.02 | <.02 | <.02 |
| Cu | <.03 | <.03 | <.03 | <.03 | <.03 | <.03 | <.03 |
| Fe | 0.1 | 0.08 | 0.1 | 0.09 | 0.07 | 0.07 | 0.08 |
| K | <.05 | <.05 | 0.1 | 0.1 | 0.1 | 0.2 | 0.2 |
| Li | <.05 | <.05 | <.2 | <.05 | <.05 | <.05 | <.05 |
| Mg | <.1 | <.05 | <.1 | <.05 | <.05 | <.05 | <.05 |
| Mn | <.02 | <.02 | <.03 | <.02 | <.02 | <.02 | <.02 |
| Mo | <.02 | <.02 | <.02 | <.02 | <.02 | <.02 | <.02 |
| Na | <.05 | <.05 | <.3 | 0.1 | 0.1 | 0.1 | 0.2 |
| Ni | <.05 | <.05 | <.05 | <.05 | <.05 | <.05 | <.05 |
| P | <.1 | <.1 | <.1 | <.1 | <.1 | <.1 | <.1 |
| Sr | <.03 | <.03 | <.03 | <.03 | <.03 | <.03 | <.03 |
| Ti | <.02 | 0.05 | 0.2 | <.02 | <.02 | 0.1 | 0.04 |
| Zn | <.05 | <.05 | <.05 | <.05 | <.05 | <.05 | <.05 |
| Zr | <.02 | <.02 | 0.2 | <.02 | <.02 | <.02 | 0.04 |

| Log Viscosity | | | | | | | |
|---|---|---|---|---|---|---|---|
| @ 1100 C | 13.9 | 14.0 | 14.4 | 14.8 | 15.0 | 14.7 | 14.8 |
| @ 1200 C | 12.7 | 12.7 | 13.0 | 13.3 | 13.5 | 13.3 | 13.3 |
| @ 1300 C | 11.6 | 11.6 | 11.8 | 12.0 | 12.1 | 12.0 | 12.0 |
| Annealing Point (C) | 1161.0 | 1163.0 | 1187 | 1208.0 | 1218.9 | 1208.9 | 1207.6 |
| Strain Point (C) | 1050.0 | 1052.3 | 1085 | 1109.0 | 1121.6 | 1105.0 | 1106.9 |
| Activation Energy (kcal/mol/K) | 117 | 118 | 133 | 142 | 146 | 135 | 139 |

The annealing point is the temperature at which the internal stress is substantially relieved at 15 minutes. The corresponding viscosity is 10^{13.2} poise.

The strain point is the temperature at which the internal stress is substantially relieved at 4 hours. The corresponding viscosity is 10^{14.5} poise.

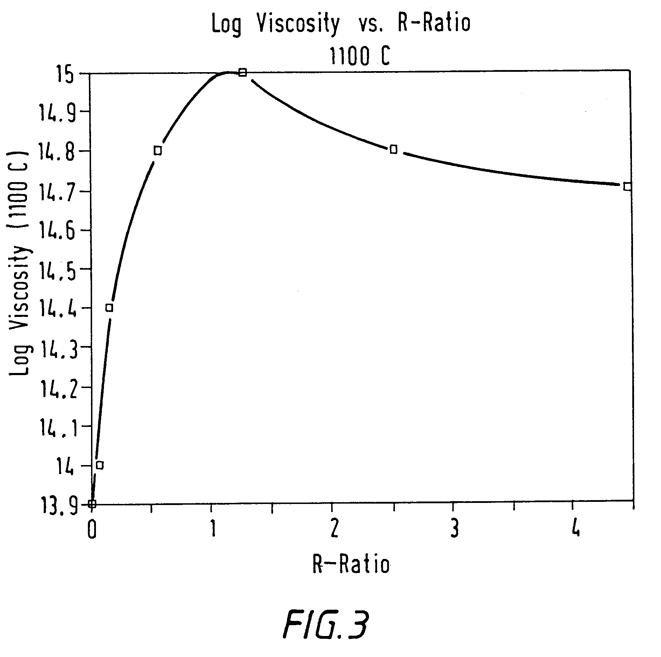

Table 1 describes the effect of various aluminum quantities on a synthetic fused silica mixture. Figure 3 graphically reflects the log viscosity of synthetic fused silica having various aluminum contents at 1100°C. Figure 3 demonstrates a preferred viscosity for semiconductor applications is achieved by a synthetic fused silica composition having an R ratio of between 0.5 and 4 and preferably 1.0 about and about 1.25.

As will be apparent to one of ordinary skill in the art, this invention also provides a process for tailoring viscosity to non-semiconductor industries. Accordingly, an understanding of the alkali and hydroxyl levels allows addition of the appropriate alumina content to achieve the desired viscosity.

## Claims

1. A process for preparing a synthetic fused silica article comprising:
a) mixing synthetic silica and Al₂O₃, wherein Al₂O₃ is added according to the ratio
R=Al₂O₃/(Li₂O+Na₂O+K₂O+H₂O)
such that 0.5 ≤ R ≤ 4.0,
b) calcining said mixture; and
c) forming said mixture into an article.

2. The process of claim 1, wherein the article is a rod or a tube.

## Patentansprüche

1. Verfahren zum Herstellen eines Gegenstandes aus synthetischem, pyrogenem Siliciumdioxid, umfassend:
(a) Vermischen von synthetischem Siliciumdioxid und Aℓ₂O₃, wobei Aℓ₂O₃ gemäß dem Verhältnis hinzugegeben wird
R=Aℓ₂O₃/(Li₂O + Na₂O + K₂O + H₂O),
so daß 0,5 ≦ R ≦ 4,0,
(b) Calcinieren dieser Mischung und
(c) Formen der Mischung zu einem Gegenstand.

2. Verfahren nach Anspruch 1, worin der Gegenstand ein Stab oder ein Rohr ist.

## Revendications

1. Procédé de préparation d'un article en silice fondue synthétique, qui comprend :
a) le mélange de silice synthétique avec de l'alumine Al₂O₃, l'alumine Al₂O₃ étant ajoutée en une quantité telle que l'on ait 0,5 ≤ R ≤ 4,0, R désignant le rapport Al₂O₃/(Li₂O + Na₂O + K₂O + H₂O),
b) la calcination dudit mélange, et
c) le formage dudit mélange en un article.

2. Procédé selon la revendication 1, dans lequel l'article est une tige ou un tube.
